# EUROPEAN PATENT APPLICATION

(11) **EP 4 597 609 A1**
(43) Date of publication of application: **06.08.2025**
(21) Application number: 23871937.1
(22) Date of filing: 13.09.2023
(51) Int. Cl.: H01M 4/131, H01M 4/1391, H01M 4/36, H01M 4/505, H01M 4/525, H01M 4/62

(54) **POSITIVE ELECTRODE FOR NONAQUEOUS ELECTROLYTE SECONDARY BATTERIES, NONAQUEOUS ELECTROLYTE SECONDARY BATTERY USING SAME, AND POSITIVE ELECTRODE SLURRY FOR POSITIVE ELECTRODES OF NONAQUEOUS ELECTROLYTE SECONDARY BATTERIES**

(30) Priority: 29.09.2022 JP 2022157046
(71) Applicant: Panasonic Intellectual Property Management Co., Ltd., Kadoma-shi, Osaka 571-0057 (JP)
(72) Inventor: MINEGISHI, Shuya, Kadoma-shi, Osaka 571-0057 (JP); UKA, Youichirou, Kadoma-shi, Osaka 571-0057 (JP)
(74) Representative: Novagraaf International SA
(86) International application number: PCT/JP2023/033401
(87) International publication number: WO 2024/070704

(57) **Abstract**

A disclosed positive electrode for a nonaqueous electrolyte secondary battery includes a positive electrode mixture layer. The positive electrode mixture layer contains at least one compound selected from the group consisting of carboxylic acids and carboxylic acid anhydrides, a positive-electrode active material, a conductive material, a fluorine-containing polymer, and a dispersant. The positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B). The conductive material includes a carbon material. The dispersant includes nitrile group-containing rubber.

## Description

### [Technical Field]

The present disclosure relates to a positive electrode for a nonaqueous electrolyte secondary battery, a nonaqueous electrolyte secondary battery using the same, and a positive electrode slurry for a positive electrode of a nonaqueous electrolyte secondary battery.

### [Background Art]

Nonaqueous electrolyte secondary batteries have high output power and high energy density, and accordingly have various uses such as consumer uses and in-vehicle uses. In recent years, there are demands for nonaqueous electrolyte secondary batteries that have higher performance. Various proposals have been made for nonaqueous electrolyte secondary batteries.

PTL 1 (Japanese Patent No. 3540097) discloses "a positive electrode mixture for a nonaqueous battery obtained by adding an organic acid to a mixture including a positive-electrode active material constituted by a composite metal oxide, a conductive aid, a vinylidene fluoride-based polymer, and an organic solvent."

### [Citation List]

### [Patent Literature]

PTL 1: Japanese Patent No. 3540097

### [Summary of Invention]

### [Technical Problem]

An object of the present disclosure is to provide a positive electrode for a nonaqueous electrolyte secondary battery that has a high capacity and is easy to manufacture.

### [Solution to Problem]

An aspect of the present disclosure relates to a positive electrode for a nonaqueous electrolyte secondary battery. The positive electrode includes a positive electrode mixture layer, the positive electrode mixture layer contains at least one compound selected from the group consisting of carboxylic acids and carboxylic acid anhydrides, a positive-electrode active material, a conductive material, a fluorine-containing polymer, and a dispersant, the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B), the conductive material includes a carbon material, and the dispersant includes nitrile group-containing rubber.

Another aspect of the present disclosure relates to a nonaqueous electrolyte secondary battery. The nonaqueous electrolyte secondary battery includes the positive electrode according to the present disclosure.

Another aspect of the present disclosure relates to a positive electrode slurry for a positive electrode of a nonaqueous electrolyte secondary battery. The positive electrode slurry contains at least one compound selected from the group consisting of carboxylic acids and carboxylic acid anhydrides, a positive-electrode active material, a conductive material, a fluorine-containing polymer, a dispersant, and a liquid medium, the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B), the conductive material includes a carbon material, and the dispersant includes nitrile group-containing rubber.

### [Advantageous Effects of Invention]

According to the present disclosure, it is possible to obtain a positive electrode for a nonaqueous electrolyte secondary battery that has a high capacity and is easy to manufacture. It is possible to easily manufacture a nonaqueous electrolyte secondary battery that has a high capacity with use of the positive electrode.

Although novel features of the present invention are described in the appended claims, the following detailed description referring to the drawings will further facilitate understanding of both the configuration and the content of the present invention as well as other objects and features of the present invention.

### [Brief Description of Drawings]

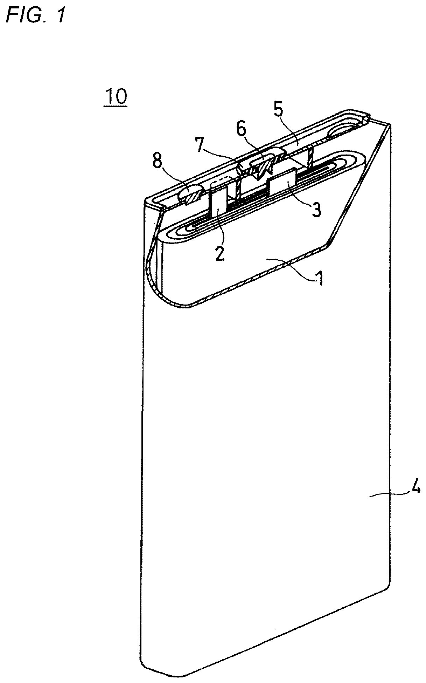

FIG. 1 is a schematic perspective view showing a nonaqueous electrolyte secondary battery according to an embodiment of the present disclosure, from which a portion has been removed.

### [Description of Embodiments]

The following describes an embodiment according to the present disclosure referring to an example, but the present disclosure is not limited to the following example. In the following description, specific numerical values and materials are described as examples, but other numerical values and materials may be applied as long as effects of the present disclosure can be obtained. In the present specification, the wording "from a numerical value A to a numerical value B" refers to a range that includes the numerical values A and B, and can be read as "the numerical value A or more and the numerical value B or less". Examples of a lower limit and examples of an upper limit of numerical values relating to a specific physical property or condition described below can be combined suitably as long as the lower limit is not equal to or higher than the upper limit. When examples of a constituent element or examples of a method are listed in the following description, only one of the listed examples may be used, or two or more of the listed examples may be used in combination, unless otherwise stated.

### (Positive Electrode for Nonaqueous Electrolyte Secondary Battery)

A positive electrode according to the present embodiment is a positive electrode for a nonaqueous electrolyte secondary battery. The positive electrode includes a positive electrode mixture layer. The positive electrode mixture layer contains at least one compound selected from the group consisting of carboxylic acids and carboxylic acid anhydrides, a positive-electrode active material, a conductive material, a fluorine-containing polymer, and a dispersant. The positive-electrode active material includes a composite oxide (composite metal oxide) represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B).
The conductive material includes a carbon material. The dispersant includes nitrile group-containing rubber. In the following description, the at least one compound selected from the group consisting of carboxylic acids and carboxylic acid anhydrides may also be referred to as a "carboxylic acid-based compound".

Currently, there are demands for nonaqueous electrolyte secondary batteries that have higher capacity. It is possible to increase the capacity of a secondary battery by using a high-Ni active material (a composite oxide having a high Ni content) as the positive-electrode active material. However, a high-Ni active material has a problem in that a large amount of alkaline impurity (e.g., lithium hydroxide) is included in the material in the process of its manufacture. Accordingly, if a positive electrode slurry is prepared with use of the high-Ni active material, the alkaline impurity included in the high-Ni active material reacts with fluorine contained in the fluorine-containing polymer (binder) and the slurry is likely to become a gel. Consequently, it becomes difficult to form the positive electrode mixture layer, and the dispersibility of the components of the positive electrode mixture layer decreases. If the dispersibility of the components of the positive electrode mixture layer decreases, the internal resistance increases and the efficiency of use of the positive-electrode active material decreases, resulting in deterioration of the performance of the battery.

It is possible to suppress the reaction between the fluorine-containing polymer and the alkaline impurity and suppress gelling of the positive electrode slurry by adding a carboxylic acid-based compound to the positive electrode slurry. However, the inventors of the present invention found through studies that the added carboxylic acid-based compound may decompose at a high potential, resulting in the generation of gas. If gas is generated in the positive electrode mixture layer, the performance and safety of the battery deteriorate depending on the amount of the generated gas. In particular, if variations are generated in the potential in the positive electrode mixture layer, the positive electrode mixture layer is likely to have a localized region where the potential is high, and decomposition of the carboxylic acid-based compound progresses particularly in the region, resulting in an increase in the amount of gas generated and significant deterioration of the performance of the battery.

The inventors of the present invention newly found through studies that it is possible to solve the problems caused by the addition of the carboxylic acid-based compound by using nitrile group-containing rubber (rubber containing a nitrile group) as a dispersant. The present disclosure is based on this new finding. According to the present disclosure, it is possible to obtain a positive electrode for a nonaqueous electrolyte secondary battery that has a high capacity and is easy to manufacture. Furthermore, according to the present disclosure, it is possible to suppress the generation of gas in the secondary battery.

Reasons why the problems caused by the addition of the carboxylic acid-based compound can be solved by using the nitrile group-containing rubber are not clear at present. However, it is thought that the addition of the nitrile group-containing rubber improves dispersibility of the carbon material (conductive material) and suppresses variations in the potential in the positive electrode mixture layer. Furthermore, the nitrile group-containing rubber has particularly high affinity with the fluorine-containing polymer, which is represented by a vinylidene fluoride-based polymer. Therefore, these two polymer materials both exhibit effects as dispersants and further improve the dispersibility of the carbon material. It is thought that, therefore, a particularly high effect can be obtained by using the nitrile group-containing rubber, the fluorine-containing polymer, and the carbon material in combination.

### (Positive-Electrode Active Material)

A substance that can absorb and release lithium ions can be used as the positive-electrode active material. Examples of the positive-electrode active material include a composite oxide that contains lithium and a transition metal. The composite oxide may have a layered structure (e.g., a rock salt crystal structure). A composite oxide represented by the composition formula shown above may be used as the positive-electrode active material.

In the composition formula shown above, M may be at least one element selected from the group consisting of Co, Mn, Al, Fe, Ti, Sr, Ca, Si, Nb, Zr, Mo, Zn, W, and B. Alternatively, M may be at least one element selected from the group consisting of Co, Mn, Al, Fe, Ti, Sr, Ca, and B. M preferably includes at least one element selected from the group consisting of Co, Mn, Al, and Fe. Note that the value of y showing a composition ratio of lithium in the composition formula shown above increases or decreases through charging and discharging. Specific examples of the composite oxide include a lithium-nickel-cobalt-aluminum composite oxide (e.g., LiNi_{0.9}Co_{0.05}Al_{0.05}O₂).

It is possible to increase the battery capacity by setting x to 0.6 or more in the composition formula of the composite oxide shown above. In the composition formula, x may satisfy 0.8≤x≤1. It is possible to particularly increase the battery capacity by setting x to 0.8 or more (e.g., 0.85 or more). On the other hand, if x is 0.8 or more, gelling of the positive electrode slurry is more likely to occur, and therefore, it is particularly important to combine the carboxylic acid-based compound, the nitrile group-containing rubber, and the carbon material.

The composite oxide is usually used in the state of particles. The average particle diameter of the composite oxide may be 1 µm or more, 2 µm or more, or 5 µm or more, and may be 20 µm or less, 15 µm or less, 10 µm or less, 6 µm or less, or 5 µm or less.

In the present specification, an average particle diameter is a median diameter (D50) at which a cumulative volume reaches 50% in a particle size distribution on the volume basis, unless otherwise specified. The median diameter is determined with use of a laser diffraction/scattering particle size analyzer. It is also possible to evaluate particle diameters of particles contained in the positive electrode mixture by observing a cross section of the positive electrode mixture.

The positive-electrode active material may include first particles of the composite oxide described above having an average particle diameter of 1 µm or more and 6 µm or less and second particles of the composite oxide described above having an average particle diameter of 8 µm or more and 20 µm or less. In this case, a peak may appear within a range from about 1 to 6 µm (particle diameter) and a peak may appear within a range from about 8 to 20 µm (particle diameter) in a particle size distribution curve (on the volume basis) of all particles of the composite oxide.

If the particles of the composite oxide have a large average particle diameter, the particles are likely to crack during charging. If the particles crack, generation of gas from particle boundaries and elution of metal from particle boundaries are likely to occur, and the durability of the battery deteriorates. On the other hand, if the particles of the composite oxide have a small average particle diameter, the particles are likely to agglomerate, and therefore, it is necessary to add a large amount of binder and a large amount of conductive material, and the capacity of the battery decreases. Moreover, if a large amount of binder and a large amount of conductive material are added, the stability of the positive electrode slurry significantly decreases. The capacity and the durability of the battery can be increased by using the two types of active material particles having different average particle diameters. However, if the two types of active material particles having different average particle diameters are used, an average surface area of the positive-electrode active material contained in the mixture increases, and the positive-electrode active material, the alkaline impurity, and the fluorine-containing polymer are more likely to come into contact with each other in the positive electrode slurry. Accordingly, gelling is likely to occur particularly when the positive electrode slurry is prepared with use of two types of active material particles having different average particle diameters, which are manufactured using a high-Ni active material. Therefore, it is particularly important to use the nitrile-group containing polymer and the carboxylic acid-based compound in combination.

A proportion R1 of the mass M1 of the first particles in the particles of the composite oxide described above may be within a range from 10 to 40% by mass (e.g., from 15 to 30% by mass). A proportion R2 of the mass M2 of the second particles in the particles of the composite oxide described above may be within a range from 60 to 90% by mass (e.g., from 70 to 85% by mass).

Contents of elements constituting the composite oxide can be measured with use of inductively coupled plasma atomic emission spectroscopy (ICP-AES), an electron probe micro analyzer (EPMA), or energy dispersive X-ray spectroscopy (EDX), for example.

### (Conductive Material)

Examples of the carbon material (conductive material) include conductive carbon particles such as carbon black, carbon nanotubes, and other conductive carbon materials. The carbon material preferably includes carbon nanotubes. If carbon nanotubes are used as the conductive material, it is possible to particularly suppress variations in the potential in the positive electrode and particularly suppress the generation of gas. Furthermore, if carbon nanotubes are used, it is possible to reduce the resistance of the positive electrode mixture layer with a small amount of addition of the carbon nanotubes. The proportion of carbon nanotubes in all carbon materials (conductive material) is 50% by mass or more, for example, and preferably 80 to 100% by mass (e.g., 90 to 100% by mass).

The amount of carbon nanotubes contained in the positive electrode mixture layer with respect to 100 parts by mass of the positive-electrode active material may be 0.01 parts by mass or more and 1 part by mass or less, and may be 0.02 parts by mass or more and 0.5 parts by mass or less.

The carbon nanotubes may have an average length of 1 µm or more. In this case, the carbon nanotubes have a very large aspect ratio (ratio of the length of a fiber to its diameter). Carbon nanotubes having a large aspect ratio are likely to come into line contact with the positive-electrode active material and the current collector. Furthermore, carbon nanotubes have excellent electrical conductivity. Accordingly, it is possible to significantly reduce the DC resistance (DCR) of the battery with use of the carbon nanotubes. The carbon nanotubes present in the positive electrode may be bundles of a plurality of carbon nanotubes. The length of each carbon nanotube included in the bundles of carbon nanotubes is used to calculate the average length described above.

From the viewpoint of increasing the electrical conductivity in the mixture layer, the average length of the carbon nanotubes is preferably 1 µm or more. On the other hand, there is no particular limitation on the upper limit of the length of the carbon nanotubes, but it is preferable that the length of the carbon nanotubes is not too large compared with the particle diameter of the positive-electrode active material. The average length of the carbon nanotubes may be 1 µm or more, or 5 µm or more, and may be 20 µm or less, or 15 µm or less.

The average length of the carbon nanotubes is determined through image analysis performed with use of a scanning electron microscope (SEM). The average length of the carbon nanotubes is determined by measuring lengths of arbitrarily selected 100 carbon nanotubes and calculating an arithmetic average of the lengths. The length of each carbon nanotube is the length of the carbon nanotube extending linearly.

The average diameter of the carbon nanotubes may be 20 nm or less, or 15 nm or less, and may be 1 nm or more. If the average diameter is 20 nm or less, it is possible to obtain a high effect with a small amount of carbon nanotubes.

The average diameter of the carbon nanotubes is determined through image analysis performed with use of a transmission electron microscope (TEM). The average diameter of the carbon nanotubes can be measured with use of the following method. First, 100 carbon nanotubes are arbitrarily selected, and the diameter (outer diameter) of each of the selected carbon nanotubes is measured at an arbitrarily selected point on the carbon nanotube. Then, an arithmetic average of the measured diameters is calculated to obtain the average diameter.

The carbon nanotubes may be either single-wall carbon nanotubes (SWCNT) or multiwall carbon nanotubes (MWCNT). Examples of the multiwall carbon nanotubes include double-wall carbon nanotubes, triple-wall carbon nanotubes, and carbon nanotubes having four or more walls. The positive electrode mixture layer preferably contains single-wall carbon nanotubes and/or multiwall carbon nanotubes. Multiwall carbon nanotubes contained in the positive electrode mixture layer may be multiwall carbon nanotubes of one type or multiwall carbon nanotubes of a plurality of types having different numbers of walls.

The BET specific surface area of the carbon nanotubes may be 200 m²/g or more, 250 m²/g or more, or 300 m²/g or more. The upper limit of the BET specific surface area is not particularly limited, but may be 2,000 m²/g or less. If the BET specific surface area is 200 m²/g or more, it is possible to suppress variations in the potential in the positive electrode mixture layer even with a small amount of addition of the carbon nanotubes. The BET specific surface area of the carbon nanotubes can be measured with use of a BET method described in JIS (Japanese Industrial Standard) R1626.

### (Carboxylic Acid-Based Compound)

The carboxylic acid-based compound may be a monovalent carboxylic acid, a polyvalent carboxylic acid (e.g., a divalent carboxylic acid or a trivalent carboxylic acid), or a carboxylic acid anhydride. Examples of carboxylic acids include formic acid, acetic acid, propionic acid, oxalic acid, malonic acid, succinic acid, glutaric acid, adipic acid, maleic acid, fumaric acid, phthalic acid, and aconitic acid. Examples of carboxylic acid anhydrides include acetic anhydride, propionic anhydride, oxalic anhydride, succinic anhydride, maleic anhydride, phthalic anhydride, and malonic anhydride. Carboxylic acids may react with the alkaline impurity. A carboxylic acid anhydride added to the positive electrode slurry may be converted to a carboxylic acid and/or react with the alkaline impurity.

The amount of carboxylic acid-based compound contained in the positive electrode mixture layer with respect to 100 parts by mass of the positive-electrode active material may be 0.001 parts by mass or more, or 0.01 parts by mass or more, and may be 0.2 parts by mass or less, or 0.1 parts by mass or less. The amount of carboxylic acid-based compound contained in the positive electrode mixture layer with respect to 100 parts by mass of the positive-electrode active material may be within a range from 0.001 to 0.2 parts by mass, for example. If the amount of carboxylic acid-based compound is within this range, it is possible to particularly suppress gelling of the positive electrode slurry and to stably obtain a positive electrode having high performance.

### (Nitrile Group-Containing Rubber)

The nitrile group-containing rubber contains a nitrile group. The nitrile group-containing rubber serves as a dispersant. The nitrile group-containing rubber may also serve as a binder in the positive electrode mixture layer. Examples of the nitrile group-containing rubber include a copolymer of monomers including acrylonitrile and diene (e.g., butadiene). More specifically, examples of the nitrile group-containing rubber include nitrile rubber (NBR), hydrogenated nitrile rubber (H-NBR), and modified products thereof. The nitrile group-containing rubber may have a weight average molecular weight within a range from 5,000 to 500,000.

The amount of nitrile group-containing rubber contained in the positive electrode mixture layer with respect to 100 parts by mass of the positive-electrode active material may be 0.01 parts by mass or more, or 0.05 parts by mass or more, and may be 1 part by mass or less, or 0.5 parts by mass or less.

### (Fluorine-Containing Polymer)

The fluorine-containing polymer serves as a binder in the positive electrode mixture layer. The fluorine-containing polymer is a polymer containing fluorine. Examples of the fluorine-containing polymer include a vinylidene fluoride-based polymer. Examples of the vinylidene fluoride-based polymer include a polymer of monomers including vinylidene fluoride. The fluorine-containing polymer may also be a combination of a vinylidene fluoride-based polymer and another fluorine-containing polymer. The vinylidene fluoride-based polymer may be a copolymer of vinylidene fluoride and another monomer. Examples of the vinylidene fluoride-based polymer include polyvinylidene fluoride (PVDF).

The amount of fluorine-containing polymer contained in the positive electrode mixture layer with respect to 100 parts by mass of the positive-electrode active material may be 0.1 parts by mass or more, or 0.5 parts by mass or more, and may be 2.0 parts by mass or less, or 1.2 parts by mass or less.

The weight average molecular weight of the fluorine-containing polymer may be 800,000 or more, 1,000,000 or more, or 1,200,000 or more, and may be 2,000,000 or less, or 1,800,000 or less. If the weight average molecular weight is 1,000,000 or more, it is possible to obtain a high effect of the binder with a small amount of the fluorine-containing polymer.

The positive electrode mixture layer may also contain a component (e.g., a thickener) other than the components described above or a compound other than the compounds described above. For example, the positive electrode mixture layer may also contain polyvinylpyrrolidone, a cellulose derivative (alkyl cellulose, carboxyalkyl cellulose, salts thereof, etc.), or the like. Polymer materials such as polyvinylpyrrolidone and a cellulose derivative can serve as a dispersant or a binder.

The proportion of the positive-electrode active material in the positive electrode mixture layer is determined with use of a mixture sample. The mixture sample is obtained as follows. First, a discharged secondary battery is disassembled to take out the positive electrode. Next, the positive electrode is washed with an organic solvent and then dried in a vacuum, and thereafter only the positive electrode mixture layer is taken out and used as the mixture sample. It is possible to calculate proportions of the binder and the conductive material other than the positive-electrode active material by analyzing the mixture sample with use of TG-DTA, NMR, pyrolytic GC-MS, or the like. If the conductive material includes a plurality of types of carbon materials, the proportion of carbon nanotubes in the conductive material can be calculated by performing micro-Raman spectroscopy on a cross section of the positive electrode mixture layer.

The mass of the positive electrode mixture layer (single layer) per 1 m² may be 200 g or more, and is preferably 250 g or more. It is possible to increase the capacity of a lithium ion battery including the positive electrode mixture layer by setting the mass to 250 g or more. As described above, a positive electrode plate according to the present disclosure can suppress adverse effects caused by increasing the mass. The mass can be increased by increasing the thickness of the positive electrode mixture layer or the density of the positive electrode mixture layer.

The thickness of the positive electrode mixture layer is not particularly limited, but may be within a range from 50 µm to 250 µm. According to the present embodiment, it is possible to suppress an increase in the internal resistance even if the positive electrode mixture layer is made thick.

### (Positive Electrode Current Collector)

The positive electrode may include a positive electrode current collector. The positive electrode mixture layer may be disposed on the positive electrode current collector. The shape and the thickness of the positive electrode current collector can be selected according to an intended use, and can be selected in such a manner as to correspond to the shape and the thickness of a negative electrode current collector. Examples of the material of the positive electrode current collector include stainless steel, aluminum, an aluminum alloy, and titanium.

### (Positive Electrode Slurry and Method for Manufacturing Positive Electrode)

A positive electrode slurry according to the present embodiment is a slurry for a positive electrode of a nonaqueous electrolyte secondary battery. This slurry is used to manufacture the positive electrode described above. Matter described for the positive electrode can be applied to the positive electrode slurry, and therefore, redundant descriptions thereof may be omitted.

The positive electrode slurry contains the above-described components of the positive electrode mixture layer and a liquid medium (dispersion medium) in which the components are dispersed. Specifically, the positive electrode slurry contains a carboxylic acid-based compound, a positive-electrode active material, a conductive material, a fluorine-containing polymer, a dispersant, and a liquid medium. The positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B). The conductive material includes a carbon material. The dispersant includes nitrile group-containing rubber. Each component is described above, and therefore, redundant descriptions thereof are omitted. The positive electrode slurry may further contain the above-described optional components (polyvinylpyrrolidone, a cellulose derivative, etc.).

The liquid medium (dispersion medium) is not particularly limited, and it is possible to use water, an organic solvent, or a mixed solvent thereof. Examples of the organic solvent include alcohols (e.g., ethanol), ethers (e.g., tetrahydrofuran), amides (e.g., dimethylformamide), and N-methyl-2-pyrrolidone (NMP).

In principle, the ratio between components contained in the positive electrode slurry is reflected in the ratio between those components contained in the positive electrode mixture layer. Accordingly, by changing the ratio between the components contained in the positive electrode slurry, it is possible to change the ratio between those components contained in the positive electrode mixture layer. The ratio between the components described as an example regarding the positive electrode mixture layer can be applied to the ratio between those components contained in the positive electrode slurry.

There is no particular limitation on the method for manufacturing the positive electrode, and a known method may be applied. For example, the positive electrode may be formed with use of the following method. First, the positive electrode slurry is prepared by dispersing materials of the positive electrode mixture layer (the positive-electrode active material, the carboxylic acid-based compound, the conductive material, the fluorine-containing polymer, the dispersant, and other optional components as necessary) in the liquid medium. Next, the positive electrode slurry is applied to a surface of a positive electrode current collector to form a coating film, and then the coating film is dried, and thus the positive electrode mixture layer can be formed. The dried coating film may be rolled as necessary. The positive electrode mixture layer may be formed on one surface of the positive electrode current collector or on both surfaces of the positive electrode current collector.

### (Conductive Material Dispersion Liquid)

The present disclosure provides a conductive material dispersion liquid. The conductive material dispersion liquid can be used to prepare the positive electrode slurry. The conductive material dispersion liquid contains a carboxylic acid-based compound, a conductive material, a fluorine-containing polymer, a dispersant, and a liquid medium. The conductive material includes a carbon material. The dispersant includes nitrile group-containing rubber. These components are described above, and therefore, redundant descriptions thereof are omitted. The conductive material dispersion liquid may contain components (e.g., the above-described optional components) that are optionally contained in the positive electrode mixture layer.

It is possible to use, as the liquid medium of the conductive material dispersion liquid, the liquid mediums described regarding the positive electrode slurry or another liquid medium. Basically, the conductive material dispersion liquid does not contain the positive-electrode active material. The positive electrode slurry can be prepared by adding the positive-electrode active material to the conductive material dispersion liquid. The optional components and the liquid medium of the positive electrode mixture layer may also be added to the conductive material dispersion liquid together with the positive-electrode active material.

By changing the ratio between the components contained in the conductive material dispersion liquid, it is possible to change the ratio between those components contained in the positive electrode mixture layer. The ratio between the components described as an example regarding the positive electrode mixture layer can be applied to the ratio between the components contained in the conductive material dispersion liquid. Specifically, it is possible to determine the ratio between the components from the ratios of the respective components with respect to 100 parts by mass of the positive-electrode active material described as examples regarding the positive electrode mixture layer.

### (Nonaqueous Electrolyte Secondary Battery)

A nonaqueous electrolyte secondary battery according to the present embodiment includes the positive electrode according to the present embodiment. The secondary battery includes at least a negative electrode and a nonaqueous electrolyte in addition to the positive electrode. The secondary battery may include the positive electrode, the negative electrode, the nonaqueous electrolyte, a separator, and an exterior body. Examples of the secondary battery include a lithium ion secondary battery, a lithium metal secondary battery, and the like. There is no particular limitation on the constituent elements other than the positive electrode mixture layer, and it is possible to use known constituent elements. The following describes examples of the constituent elements of the secondary battery.

### (Positive Electrode)

The positive electrode according to the present embodiment is used as the positive electrode.

### (Negative Electrode)

The negative electrode typically includes a negative electrode mixture layer that contains a negative-electrode active material. The negative electrode may include a negative electrode current collector and the negative electrode mixture layer disposed on the negative electrode current collector. However, in the case of a lithium metal secondary battery, a negative electrode current collector on which lithium metal or a lithium alloy can be deposited is used for the negative electrode.

The negative electrode mixture layer contains the negative-electrode active material as an essential component. The negative electrode mixture layer may also contain a binder, a thickener, a conductive material, and the like as optional components. The components described as examples of the components of the positive electrode may be used as the optional components.

The negative electrode mixture layer may be formed by applying a negative electrode slurry obtained by dispersing the constituent components of the negative electrode mixture layer in a liquid medium (dispersion medium) to a surface of the negative electrode current collector, and drying the thus formed coating film. The dried coating film may be rolled as necessary. The liquid mediums described as examples of the liquid medium of the positive electrode slurry may be used as the liquid medium.

### (Negative-Electrode Active Material)

The negative-electrode active material is selected according to the type of the secondary battery. An example of the negative-electrode active material is a substance that can absorb and release lithium ions. Examples of such a substance include a carbonaceous material and a Si-containing material. The negative-electrode active material may include a Si-containing material or may be a Si-containing material. Lithium metal, a lithium alloy, or the like may also be used as the negative-electrode active material. The negative electrode may contain one type of negative-electrode active material or two or more types of negative-electrode active materials in combination.

Examples of the carbonaceous material include graphite, graphitizable carbon (soft carbon), and non-graphitizable carbon (hard carbon). One type of carbonaceous material may be used alone, or two or more types of carbonaceous materials may be used in combination. Graphite is preferable in terms of realizing excellent stability of charging and discharging and a small irreversible capacity. Examples of graphite include natural graphite, artificial graphite, and graphitized mesophase carbon particles.

Examples of the Si-containing material include Si simple substance, a silicon alloy, a silicon compound (e.g., a silicon oxide), and a composite material including silicon phases dispersed in a lithium ion conductive phase (matrix). Examples of the silicon oxide include SiOₓ particles. x satisfies, for example, 0.5≤x<2, and may satisfy 0.8≤x≤1.6. It is possible to use, as the lithium ion conductive phase, at least one selected from the group consisting of a SiO₂ phase, a silicate phase, and a carbon phase.

A metal foil may be used as the negative electrode current collector. The negative electrode current collector may be porous. Examples of the material of the negative electrode current collector include stainless steel, nickel, a nickel alloy, copper, and a copper alloy.

### (Nonaqueous Electrolyte)

The nonaqueous electrolyte (nonaqueous electrolyte solution) includes a solvent (nonaqueous solvent) and a solute dissolved in the solvent. Examples of the solute include a lithium salt. Various additives may be added to the electrolyte solution.

A known material may be used as the solvent. For example, a cyclic carbonate ester, a chain carbonate ester, a cyclic carboxylic acid ester, a chain carboxylic acid ester, or the like is used as the solvent. Examples of the cyclic carbonate ester include propylene carbonate (PC), ethylene carbonate (EC), fluoroethylene carbonate (FEC), and vinylene carbonate (VC). Examples of the chain carbonate ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include nonaqueous solvents such as methyl acetate, ethyl acetate, propyl acetate, methyl propionate (MP), and ethyl propionate (EP). One type of nonaqueous solvent may be used alone, or two or more types of nonaqueous solvents may be used in combination.

Examples of the lithium salt include a lithium salt of chlorine-containing acid (LiClO₄, LiAlCl₄, LiB₁₀Cl₁₀, etc.), a lithium salt of fluorine-containing acid (LiPF₆, LiPF₂O₂, LiBF₄, LiSbF₆, LiAsF₆, LiCF₃SO₃, LiCF₃CO₂, etc.), a lithium salt of fluorine-containing acid imide (LiN(FSO₂)₂, LiN(CF₃SO₂)₂, LiN(CF₃SO₂)(C₄F₉SO₂), LiN(C₂F₅SO₂)₂, etc.), and a lithium halide (LiCl, LiBr, LiI, etc.). One type of lithium salt may be used alone, or two or more types of lithium salts may be used in combination.

The concentration of the lithium salt in the electrolyte solution may be 1 mol/L or more and 2 mol/L or less, or 1 mol/L or more and 1.5 mol/L or less. By setting the concentration of the lithium salt so as to fall within the above range, it is possible to obtain an electrolyte solution that has excellent ion conductivity and appropriate viscosity.

The electrolyte solution may contain a known additive. Examples of the additive include 1,3-propane sultone, methylbenzenesulfonate, cyclohexylbenzene, biphenyl, diphenyl ether, and fluorobenzene.

### (Separator)

The separator is disposed between the positive electrode and the negative electrode. The separator preferably has a high ion permeability, appropriate mechanical strength, and appropriate insulating properties. It is possible to use a microporous thin film, woven fabric, non-woven fabric, or the like as the separator. Examples of the material of the separator include polyolefin (polypropylene, polyethylene, etc.) and other resins.

### (Exterior Body)

An electrode group and the nonaqueous electrolyte are housed in the exterior body (battery case). There is no particular limitation on the exterior body, and it is possible to use a known exterior body. The electrode group is constituted of the positive electrode, the negative electrode, and the separator. There is no particular limitation on the configuration of the electrode group, and the electrode group may be a wound electrode group or a stacked electrode group. The wound electrode group is formed by winding the positive electrode and the negative electrode with the separator disposed therebetween. The stacked electrode group is formed by stacking the positive electrode and the negative electrode with the separator disposed therebetween. The shape of the nonaqueous electrolyte secondary battery is not particularly limited, and may be a cylindrical shape, a rectangular shape, a coin shape, a button shape, a laminate shape, or the like.

FIG. 1 is a schematic perspective view showing a secondary battery 10 according to an embodiment of the present disclosure, from which a portion has been removed. FIG. 1 shows a rectangular nonaqueous electrolyte battery as an example. The secondary battery 10 shown in FIG. 1 includes a battery case 4 having a rectangular tube shape with a bottom, and an electrode group 1 and a nonaqueous electrolyte (not shown) that are housed in the battery case 4.

The electrode group 1 includes a negative electrode having a long band shape, a positive electrode having a long band shape, and a separator disposed between the negative electrode and the positive electrode. A negative electrode current collector included in the negative electrode is electrically connected to a negative electrode terminal 6 provided in a sealing plate 5 via a negative electrode lead 3. The negative electrode terminal 6 is insulated from the sealing plate 5 by a resin gasket 7. A positive electrode current collector included in the positive electrode is electrically connected to the rear surface of the sealing plate 5 via a positive electrode lead 2. A peripheral edge of the sealing plate 5 is fitted to an open end portion of the battery case 4, and the fitted portion is welded with a laser. That is to say, the positive electrode is electrically connected to the battery case 4 that also serves as a positive electrode terminal. The sealing plate 5 has an inlet for the nonaqueous electrolyte. The inlet is closed with a sealing plug 8 after the nonaqueous electrolyte is poured into the battery case.

The positive electrode includes the positive electrode current collector and a positive electrode mixture layer disposed on the positive electrode current collector. The above-described positive electrode mixture layer is used as the positive electrode mixture layer.

### (Supplementary Note)

The above description discloses the following technologies.

### (Technology 1)

A positive electrode for a nonaqueous electrolyte secondary battery, including:
a positive electrode mixture layer,
wherein the positive electrode mixture layer contains at least one compound selected from the group consisting of carboxylic acids and carboxylic acid anhydrides, a positive-electrode active material, a conductive material, a fluorine-containing polymer, and a dispersant,
the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B),
the conductive material includes a carbon material, and
the dispersant includes nitrile group-containing rubber.

### (Technology 2)

The positive electrode according to technology 1, wherein x in the composition formula of the composite oxide satisfies 0.8≤x≤1.

### (Technology 3)

The positive electrode according to technology 1 or 2, wherein the positive-electrode active material includes first particles of the composite oxide having an average particle diameter of 1 µm or more and 6 µm or less and second particles of the composite oxide having an average particle diameter of 8 µm or more and 20 µm or less.

### (Technology 4)

The positive electrode according to technology 1 or 2, wherein the carbon material includes carbon nanotubes.

### (Technology 5)

The positive electrode according to technology 4, wherein the carbon nanotubes have an average diameter of 20 nm or less.

### (Technology 6)

The positive electrode according to any one of technologies 1 to 5, wherein an amount of the at least one compound contained in the positive electrode mixture layer with respect to 100 parts by mass of the positive-electrode active material is within a range from 0.001 to 0.2 parts by mass.

### (Technology 7)

A nonaqueous electrolyte secondary battery including the positive electrode according to any one of technologies 1 to 6.

### (Technology 8)

A positive electrode slurry for a positive electrode of a nonaqueous electrolyte secondary battery, the positive electrode slurry including:
at least one compound selected from the group consisting of carboxylic acids and carboxylic acid anhydrides, a positive-electrode active material, a conductive material, a fluorine-containing polymer, a dispersant, and a liquid medium,
the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B),
the conductive material includes a carbon material, and
the dispersant includes nitrile group-containing rubber.

### (Technology 9)

The positive electrode slurry according to technology 8, wherein x in the composition formula of the composite oxide satisfies 0.8≤x≤1.

### (Technology 10)

The positive electrode slurry according to technology 8 or 9, wherein the positive-electrode active material includes first particles of the composite oxide having an average particle diameter of 1 µm or more and 6 µm or less and second particles of the composite oxide having an average particle diameter of 8 µm or more and 20 µm or less.

### (Technology 11)

The positive electrode according to any one of technologies 8 to 10, wherein the carbon material includes carbon nanotubes.

### (Technology 12)

The positive electrode slurry according to technology 11, wherein the carbon nanotubes have an average diameter of 20 nm or less.

### (Technology 13)

The positive electrode slurry according to any one of technologies 8 to 12, wherein an amount of the at least one compound with respect to 100 parts by mass of the positive-electrode active material is within a range from 0.001 to 0.2 parts by mass.

### Examples

The following specifically describes the present disclosure based on examples, but the present disclosure is not limited by the following examples. In the examples, a plurality of nonaqueous electrolyte secondary batteries including different positive electrodes were manufactured and evaluated.

### (Manufacture of Battery A1)

A battery A1 was manufactured with use of the following method.

### (1) Manufacture of Negative Electrode

A silicon composite material and graphite were mixed at a mass ratio of silicon composite material:graphite=5:95, and the mixture was used as a negative-electrode active material. The negative-electrode active material, carboxymethyl cellulose sodium (CMC-Na), styrene-butadiene rubber (SBR), and water were mixed at a predetermined mass ratio to prepare a negative electrode slurry. Next, the negative electrode slurry was applied to surfaces of a copper foil (negative electrode current collector) to form a laminate including the copper foil and coating films formed on the copper foil. Next, the coating films were dried, and then the laminate was rolled. Thus, a negative electrode including the copper foil and negative electrode mixture layers formed on both surfaces of the copper foil was formed.

### (2) Manufacture of Positive Electrode

First, a positive electrode slurry SA1 was prepared by mixing a positive-electrode active material, polyvinylidene fluoride (binder), carbon nanotubes (conductive material), nitrile group-containing rubber (dispersant), a carboxylic acid-based compound, and N-methyl-2-pyrrolidone (dispersion medium) at a predetermined mass ratio. A composite oxide represented by a composition formula LiNi_{0.80}Co_{0.10}Mn_{0.10}O₂ was used as the positive-electrode active material. A mixture of particles having an average particle diameter of 1 µm and particles having an average particle diameter of 8 µm was used as the positive-electrode active material (composite oxide).

The carbon nanotubes had an average length of 1 µm and an average diameter of 10 nm. The carbon nanotubes were added in an amount of 0.5 parts by mass with respect to 100 parts by mass of the positive-electrode active material. Polyvinylidene fluoride was added in an amount of 1 part by mass with respect to 100 parts by mass of the positive-electrode active material. Maleic anhydride was used as the carboxylic acid-based compound. The carboxylic acid-based compound was added in an amount of 0.05 parts by mass with respect to 100 parts by mass of the positive-electrode active material. The nitrile group-containing rubber was added in an amount of 0.1 parts by mass with respect to 100 parts by mass of the positive-electrode active material.

Next, the positive electrode slurry was applied to surfaces of an aluminum foil (positive electrode current collector) to form coating films, and thus a laminate including the aluminum foil and the coating films was obtained. Next, the coating films were dried, and then the laminate was rolled. Thus, a positive electrode PA1 including the aluminum foil and positive electrode mixture layers formed on both surfaces of the aluminum foil was manufactured.

### (3) Preparation of Electrolyte Solution (Nonaqueous Electrolyte)

An electrolyte solution was prepared by adding LiPF₆ (lithium salt) to a nonaqueous solvent. The concentration of LiPF₆ in the electrolyte solution was 1.0 mol/L. A mixed solvent containing ethylene carbonate (EC) and ethyl methyl carbonate (EMC) at a volume ratio of EC:EMC=3:7 was used as the nonaqueous solvent.

### (4) Manufacture of Secondary Battery

Leads were respectively attached to the positive electrode and the negative electrode described above. Next, the positive electrode, the negative electrode, and a separator were spirally wound such that the separator was disposed between the positive electrode and the negative electrode, and thus an electrode group was manufactured.

Next, the electrode group was inserted into an exterior body. The exterior body used was formed from a laminate film including an aluminum foil (barrier layer). Next, the exterior body into which the electrode group had been inserted was dried in a vacuum at 105°C for 2 hours, and then the nonaqueous electrolyte solution was poured into the exterior body, and an opening of the exterior body was sealed. Thus, the secondary battery A1 was manufactured.

### (Manufacture of Batteries A2 to A6 and Batteries C1 to C5)

Positive electrode slurries SA2 to SA6 and SC1 to SC5 were prepared using the same method and the same conditions as the method and the conditions used to prepare the positive electrode slurry SA1 of the battery A1, except that the components (the conductive material, the carboxylic acid-based compound, and the nitrile group-containing rubber) contained in the positive electrode slurries, the composition of the positive-electrode active material, and the particle size distribution of the positive-electrode active material were changed as shown in Table 1. The same composite oxide as the composite oxide constituting the positive-electrode active material used in the positive electrode slurry SA1 was used as the composite oxide constituting the positive-electrode active material. In Table 1, if the particle size distribution of the active material particles is "two types", a mixture of particles having an average particle diameter of 1 µm and particles having an average particle diameter of 8 µm was used as in the positive electrode slurry SA1. In Table 1, if the particle size distribution of the active material particles is "one type", active material particles having an average particle diameter of 12 µm were used. Positive electrodes PA2 to PA6 and PC1 to PC5 were manufactured using the same method and the same conditions as the method and the conditions used to manufacture the positive electrode PA1 of the battery A1, except that those positive electrode slurries were used. Batteries A2 to A6 and C1 to C5 were manufactured using the same method and the same conditions as the method and the conditions used to manufacture the battery A1, except that those positive electrodes were used.

### (Evaluation of Stability of Positive Electrode Slurry)

Stability of each of the manufactured positive electrode slurries described above was evaluated using the following method. A viscosity of the slurry on the date of its manufacture and a viscosity of the slurry after the slurry was left to stand for 2 days after the manufacture were measured, and the rate of increase in the viscosity was calculated as a viscosity increase rate of the slurry. The viscosities of the slurry were measured with use of a B-type viscometer.

### (Measurement of Battery Capacity)

The battery capacity of each of the manufactured batteries described above was measured as follows. First, in an environment at 25°C, each battery was subjected to constant current charging with the maximum current value set to 0.3It until the voltage reached 4.2 V, and then the battery was subjected to constant voltage charging at 4.2 V until the current value decreased to 0.05It. Thereafter, the battery was subjected to constant current discharging at 0.2It with a discharge termination voltage set to 2.5 V. A discharge capacity at this time was measured. Note that It(A)=rated capacity(Ah)/1(h).

### (Evaluation of Amount of Gas Generated)

Each of the manufactured batteries described above was evaluated in terms of the amount of gas generated with use of the following method. First, each of the manufactured batteries, which had been charged, was stored in a thermostatic chamber set at 80°C. Next, the battery was discharged and then disassembled in a sealed container, and the amount of gas generated was evaluated.

Some of the components contained in the positive electrode mixture layers and evaluation results are shown in Table 1. In Table 1, the viscosity increase rate of each slurry is expressed by a relative value when the viscosity increase rate of the slurry C1 is taken to be 100%, the battery capacity of each battery is expressed by a relative value when the battery capacity of the battery C1 is taken to be 100%, and the amount of gas generated in each battery is expressed by a relative value when the amount of gas generated in the battery C1 is taken to be 100%. In Table 1, "Ni proportion x in composition of active material" indicates the value of x in the composition formula Li_{y}NiₓM₍₁₋ₓ₎O_{2-δ} representing the positive-electrode active material. As for "particle size distribution of active material particles" in Table 1, "two types" indicates that a mixture of two types of positive-electrode active materials having different average particle diameters was used, and "one type" indicates that the mixture of two types of positive-electrode active materials having different average particle diameters was not used. That is to say, a particle size distribution curve of active material particles for which "particle size distribution of active material particles" is "two types" includes two peaks, and a particle size distribution curve of active material particles for which "particle size distribution of active material particles" is "one type" includes one peak.

**[Table 1]**

| Battery | Positive electrode slurry/Positive electrode | Ni proportion x in composition of active material | Particle size distribution of active material particles | Conductiv e material | Carboxylic acid-based compound | Nitrile group-containing rubber | Viscosity increase rate of slurry (%) | Battery capacity (%) | Amount of gas generated (%) |
|---|---|---|---|---|---|---|---|---|---|
| A1 | SA1/PA1 | 0.8 | Two types | CNT | Maleic anhydride | H-NBR | 23 | 102 | 100 |
| A2 | SA2/PA2 | 0.8 | Two types | CB | Maleic anhydride | H-NBR | 22 | 100 | 105 |
| A3 | SA3/PA3 | 0.8 | One type | CNT | Maleic anhydride | H-NBR | 20 | 98 | 98 |
| A4 | SA4/PA4 | 0.8 | Two types | CNT | Maleic acid | H-NBR | 28 | 101 | 100 |
| A5 | SA5/PA5 | 0.8 | Two types | CNT | Malonic acid | H-NBR | 24 | 100 | 99 |
| A6 | SA6/PA6 | 0.8 | Two types | CNT | Maleic anhydride | NBR | 29 | 99 | 108 |
| C1 | SC1/PC1 | 0.8 | Two types | CNT | Not added | None | 100 | 100 | 100 |
| C2 | SC2/PC2 | 0.5 | Two types | CNT | Not added | None | 25 | 87 | 94 |
| C3 | SC3/PC3 | 0.8 | One type | CNT | Not added | None | 70 | 97 | 93 |
| C4 | SC4/PC4 | 0.8 | Two types | CNT | Maleic anhydride | None | 50 | 100 | 120 |
| C5 | SC5/PC5 | 0.8 | Two types | CB | Maleic anhydride | None | 80 | 100 | 127 |
| CNT: carbon nanotubes, CB: carbon black | | | | | | | | | |
| H-NBR: hydrogenated nitrile rubber, NBR: nitrile rubber | | | | | | | | | |

The batteries A1 to A6 and the positive electrode slurries and the positive electrodes used in the manufacture of those batteries are batteries, positive electrode slurries, and positive electrodes according to the present embodiment. The batteries C1 to C5 and the positive electrode slurries and the positive electrodes used in the manufacture of those batteries are comparative examples.

In Table 1, a lower viscosity increase rate of slurry and a smaller amount of gas generated are more preferable, and a larger battery capacity is more preferable. As shown in Table 1, the positive electrode slurries according to the present disclosure had low viscosity increase rates, and it was possible to easily manufacture the positive electrodes with use of the positive electrode slurries. Also, the batteries according to the present disclosure had large battery capacities, and the amount of gas generated in these batteries was suppressed. Particularly when carbon nanotubes were used as the conductive material and hydrogenated nitrile rubber was used as the nitrile group-containing rubber, favorable batteries were obtained.

### [Industrial Applicability]

The present disclosure is applicable to a positive electrode for a nonaqueous electrolyte secondary battery and a nonaqueous electrolyte secondary battery. The secondary battery according to the present disclosure is applicable to various uses, and is preferably used as a main power source of a mobile communication device, portable electronic device, or the like, for example.

Although the present invention has been described in terms of the presently preferred embodiment, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 10: secondary battery (nonaqueous electrolyte secondary battery)

## Claims

1. A positive electrode for a nonaqueous electrolyte secondary battery, comprising:
a positive electrode mixture layer,
wherein the positive electrode mixture layer contains at least one compound selected from the group consisting of carboxylic acids and carboxylic acid anhydrides, a positive-electrode active material, a conductive material, a fluorine-containing polymer, and a dispersant,
the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B),
the conductive material includes a carbon material, and
the dispersant includes nitrile group-containing rubber.

2. The positive electrode according to claim 1, wherein x in the composition formula of the composite oxide satisfies 0.8≤x≤1.

3. The positive electrode according to claim 1 or 2, wherein the positive-electrode active material includes first particles of the composite oxide having an average particle diameter of 1 µm or more and 6 µm or less and second particles of the composite oxide having an average particle diameter of 8 µm or more and 20 µm or less.

4. The positive electrode according to claim 1 or 2, wherein the carbon material includes carbon nanotubes.

5. The positive electrode according to claim 4, wherein the carbon nanotubes have an average diameter of 20 nm or less.

6. The positive electrode according to claim 1 or 2, wherein an amount of the at least one compound contained in the positive electrode mixture layer with respect to 100 parts by mass of the positive-electrode active material is within a range from 0.001 to 0.2 parts by mass.

7. A nonaqueous electrolyte secondary battery comprising the positive electrode according to claim 1 or 2.

8. A positive electrode slurry for a positive electrode of a nonaqueous electrolyte secondary battery, the positive electrode slurry comprising:
at least one compound selected from the group consisting of carboxylic acids and carboxylic acid anhydrides, a positive-electrode active material, a conductive material, a fluorine-containing polymer, a dispersant, and a liquid medium,
wherein the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B),
the conductive material includes a carbon material, and
the dispersant includes nitrile group-containing rubber.
